# EUROPÄISCHE PATENTANMELDUNG

(11) **EP 0 546 574 A1**
(43) Veröffentlichungstag der Anmeldung: **16.06.1993**
(21) Anmeldenummer: 92121174.4
(22) Anmeldetag: 11.12.1992
(51) Int. Cl.: B60N 2/02, B60N 2/06

(54) **Vorrichtung zum Führen und Halten eines Fahrzeugsitzes relativ zur Fahrzeugkarosserie**

(30) Priorität: 13.12.1991 DE 4141200; 09.01.1992 DE 4200355
(71) Anmelder: Austria Metall Aktiengesellschaft, A-5282 Braunau am Inn (AT)
(72) Erfinder: Garnweidner, Peter, A-5112 Lamprechtshausen (AT); Mokre, Manfred, A-4936 St.Peter (AT)
(74) Vertreter: WILHELMS, KILIAN & PARTNER Patentanwälte

(57) **Zusammenfassung**

Vorrichtung zum Führen und Halten eines Fahrzeugsitzes in Längsrichtung des Fahrzeuges relativ zur Fahrzeugkarosserie mit einer Unterschiene (2), die an der Fahrzeugkarosserie befestigt ist, einer Oberschiene (4), die am Fahrzeugsitz befestigt ist und an der Unterschiene (2) entlang geführt ist, und einer Schraubenspindel (1), die drehbar an der Oberschiene (4) gehalten ist und in eine Verzahnung eingreift, die an der Unterschiene (2) vorgesehen ist. Um sicherzustellen, daß die Ineingriffnahme zwischen der Schraubenspindel (1) und der Verzahnung an der Unterschiene (2) auch bei einem Fahrzeugaufprall beibehalten wird, besteht die Verzahnung aus wenigstens einer vertikal stehenden Zahnleiste, die mit einer Eingriffsfläche (5) mit der Schraubenspindel (1) in Eingriff steht, die sich bei einem Aufprall kaum ändert.

## Beschreibung

Die Erfindung betrifft eine Vorrichtung zum Führen und Halten eines Fahrzeugsitzes in Längsrichtung des Fahrzeuges relativ zur Fahrzeugkarosserie mit einer Unterschiene, die in Längsrichtung des Fahrzeuges an der Fahrzeugkarosserie befestigt ist, einer Oberschiene, die in Längsrichtung des Fahrzeuges am Fahrzeugsitz befestigt ist und an der Unterschiene entlang geführt ist, und einer Schraubenspindel, die drehbar an der Oberschiene gehalten ist und mit ihrem Außengewinde in eine Verzahnung eingreift, die an der Unterschiene vorgesehen ist.

Vorrichtungen dieser Art, die dazu dienen, den Fahrzeugsitz in der gewünschten Position in Längsrichtung des Fahrzeuges anzuordnen und festzulegen, werden in der jüngsten Zeit anstelle von den bisher üblichen von Hand betätigten Führungs- und Haltevorrichtungen, insbesondere in Kraftfahrzeuge, eingebaut, um die Position des Fahrzeugsitzes auf einen Knopfdruck mit Hilfe eines elektrischen Antriebes einzustellen, der die Schraubenspindel je nach der gewünschten Richtung, in der der Fahrzeugsitz verstellt werden soll, in die eine oder die andere Richtung dreht.

Bei einer üblichen derartigen Vorrichtung, wie sie beispielsweise in Fig. 6 der zugehörigen Zeichnung dargestellt ist, besteht die Unterschiene 2 aus einem U-Profilteil, das mit seiner Basis horizontal auf der Fahrzeugkarosserie aufliegt und daran befestigt ist, wobei die Oberschiene 4 in Nuten in den Schenkein des U-Profilteils geführt ist. Die Verzahnung an der Unterschiene 2 besteht aus einer Zahnreihe, die in Längsrichtung des Fahrzeuges, vorzugsweise an einem mittleren gewölbten Teil vorgesehen ist, wobei in Fig. 6 der Eingriffsbereich 6 zwischen dem Außengewinde der Schraubenspindel 1 und der Zahnreihe schraffiert dargestellt ist.

Die Schraubenspindel 1 ist drehbar an der Oberschiene 4, jedoch in Längsrichtung oder in Querrichtung relativ dazu nicht bewegbar gehalten. Wenn die Schraubenspindel 1 über einen nicht dargestellten Elektromotor, beispielsweise auf einen Knopfdruck, gedreht wird, dann wird die damit verbundene Oberschiene und somit der Fahrzeugsitz in Längsrichtung des Fahrzeuges vor- und zurückbewegt, so daß die gewünschte Position des Fahrzeugsitzes eingestellt werden kann.

Die Zahnreihe an der Unterschiene 2 ist üblicherweise in Form einer Zahnstange aus einem Material ausgebildet, das eine größere Festigkeit oder Dauerhaftigkeit als das Material hat, aus dem der Rest der Unterschiene 2 gebildet ist.

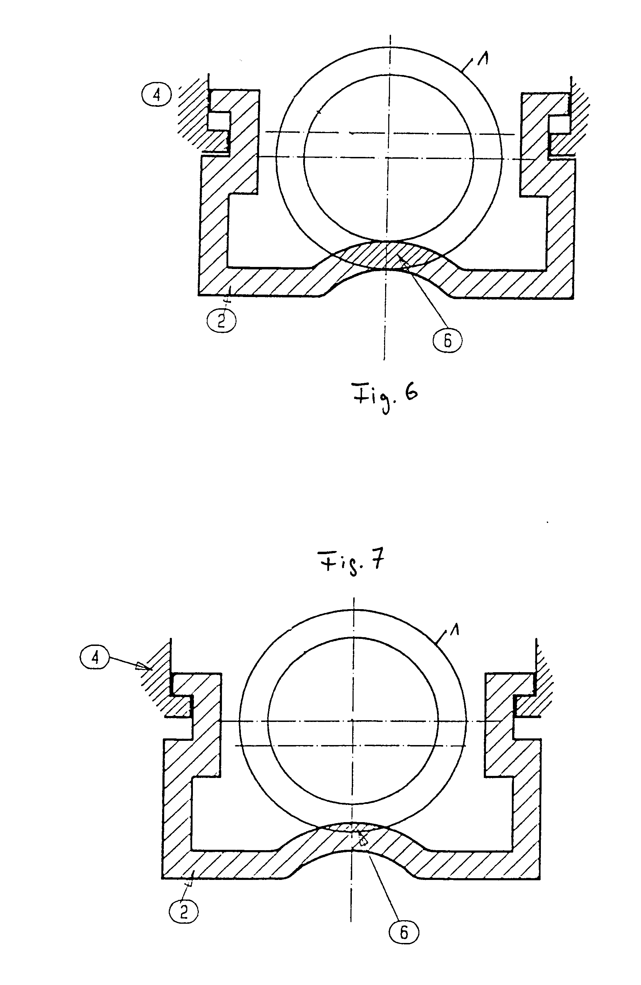

Die oben beschriebene und in Fig. 6 der zugehörigen Zeichnung dargestellte übliche Vorrichtung zum Führen und Halten eines Fahrzeugsitzes hat jedoch den Nachteil, daß in einer Unfallsituation, insbesondere bei einem Aufprall des Fahrzeuges auf ein frontales Hindernis, oder dann, wenn ein weiteres Fahrzeug von hinten auffährt, aufgrund der dabei entstehenden Aufprall- und Beschleunigungskräfte die Oberschiene 4 zusammen mit der Schraubenspindel 1 gegenüber der Unterschiene 2 etwas angehoben wird. Das ist unumgänglich, da Ober- und Unterschiene 2 und 4 im Führungsbereich ein gewisses Spiel haben müssen, damit sie gegeneinander beweglich sind. Wie es in Fig. 7 der zugehörigen Zeichnung dargestellt ist, hat ein derartiges Anheben der Oberschiene 4 relativ zur Unterschiene 2 jedoch zur Folge, daß die Eingriffsfläche 6 zwischen dem Gewinde der Schraubenspindel 1 und der Zahnstange an der Unterschiene 2 verkleinert wird. Diese Verkleinerung der Eingriffsfläche 6 kann dazu führen, daß die Schraubenspindel 1 über die Zahnscheitel der Zahnstange hinwegrutscht und sich in einer derartigen Unfallsituation die Position des Fahrzeugsitzes im Fahrzeug verändert. Das kann eine weitere Ursache für Verletzungen der Fahrzeuginsassen sein.

Die Ausbildung der Zahnreihe an der Unterschiene 2 in Form einer Zahnstange aus einem festen Material ist jedoch mit einem höheren Aufwand bei der Herstellung der Fahrzeugsitzschienenanordnung verbunden.

Die der Erfindung zugrundeliegende Aufgabe besteht daher darin, eine Vorrichtung der eingangs genannten Art zu schaffen, die auch bei einem Aufprallunfall des Fahrzeuges den Sitz sicher in seiner gewählten Position hält.

Die erfindungsgemäße Vorrichtung soll insbesondere so ausgebildet sein, daß sie diese Sicherheit bei einem kostengünstigen Aufbau bietet, der mit geringem Aufwand hergestellt werden kann.

Diese Aufgabe wird gemäß der Erfindung dadurch gelöst, daß die Verzahnung aus wenigstens einer im wesentlichen vertikal stehenden Zahnleiste besteht.

Wenn bei der erfindungsgemäßen Vorrichtung bei einem Aufprall des Fahrzeuges die Oberschiene zusammen mit der Schraubenspindel gegenüber der Unterschiene angehoben wird, dann bewegt sich der in die Verzahnung der Unterschiene eingreifende Teil der Schraubenspindel, d.h. das Gewinde der Schraubenspindel nicht in Richtung der Zahntiefe, wie es bei der bekannten Vorrichtung der Fall ist, sondern in Querrichtung der Zahnleiste, was zur Folge hat, daß sich die Eingriffsfläche nur geringfügig ändert. In dieser Weise wird sichergestellt, daß die Schraubenspindel und damit der Fahrzeugsitz bei einem Aufprall nicht in Längsrichtung über die Zahnleiste hinweg rutschen können. Der Fahrzeugsitz wird in der gewählten Position festgehalten.

Besonders bevorzugte Weiterbildungen und Ausgestaltungen der erfindungsgemäßen Vorrichtung sind Gegenstand der Patentansprüche 2 und 7.

Da bei der Vorrichtung nach Anspruch 4 zwei Zahnleisten an achssymmetrischen Positionen bezüglich der Spindel, d.h. an diametral gegenüberliegenden Positionen vorgesehen sind, ist auch bei einem Aufprall des Fahrzeuges die Schraubenspindel fest in den gegenüberliegenden Zahnleisten an der Unterschiene gehalten. Das heißt insbesondere, daß bei einem Anheben der Oberschiene zusammen mit der Schraubenspindel gegenüber der Unterschiene der Verlust an Eingriffsfläche an der einen Zahnleiste durch eine entsprechende Zunahme an Eingriffsfläche an der anderen Zahnleiste kompensiert wird. Das hat zur Folge, daß sich die Gesamteingriffsfläche nur geringfügig ändert. In dieser Weise wird sichergestellt, daß die Schraubenspindel bei einem Aufprall nicht in Längsrichtung über die Zahnleisten hinwegrutscht und sich somit die Position des Fahrzeugsitzes in Längsrichtung des Fahrzeuges nicht verändert.

Im folgenden wurden anhand der zugehörigen Zeichnung besonders bevorzugte Ausführungsbeispiele der Erfindung näher beschrieben. Es zeigen
Fig. 1 eine Schnittansicht des Ausführungsbeispiels der erfindungsgemäßen Vorrichtung,
Fig. 2 eine schematische Draufsicht auf die Schraubenspindel der Oberschiene bei dem in Fig. 1 dargestellten Ausführungsbeispiel,
Fig. 3 in einer vergrößerten Schnittansicht den Eingriffsbereich zwischen der Schraubenspindel und der Verzahnung an der Unterschiene im Normalfall,
Fig. 4 in einer vergrößerten Schnittansicht den Eingriffsbereich zwischen der Schraubenspindel und der Verzahnung an der Unterschiene bei einem Fahrzeugaufprall,
Fig. 5 eine Schnittansicht eines weiteren Ausführungsbeispiels der erfindungsgemäßen Vorrichtung,
Fig. 6 eine Schnittansicht einer herkömmlichen Vorrichtung im Normalfall, und
Fig. 7 eine Schnittansicht der in Fig. 5 dargestellten herkömmlichen Vorrichtung bei einem Aufprall des Fahrzeuges.

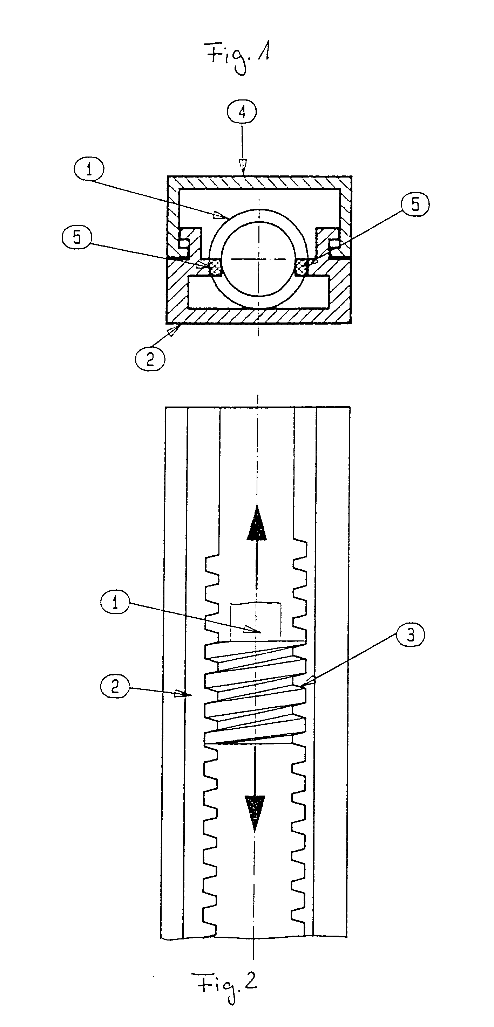

Das in Fig. 1 dargestellte Ausführungsbeispiel der erfindungsgemäßen Vorrichtung zum Führen und Halten eines nicht dargestellten Fahrzeugsitzes in Längsrichtung des Fahrzeuges relativ zu einer gleichfalls nicht dargestellten Fahrzeugkarosserie besteht im wesentlichen aus einer Unterschiene 2, die an der Fahrzeugkarosserie befestigt ist, einer Oberschiene 4, die am Fahrzeugsitz befestigt ist, und einer Schraubenspindel 1, die relativ zur Oberschiene 4 drehbar, jedoch im übrigen relativ dazu unbeweglich an der Oberschiene 4 gehalten ist.

Vorzugsweise sind die Unterschiene 2 sowie die Oberschiene 4 jeweils aus U-Profilteilen gebildet, wobei die Unterschiene 2 mit ihrer Basis horizontal auf der Fahrzeugkarosserie aufliegt und daran befestigt ist, so daß die Schenkel des U-Profilteils vertikal verlaufen. Das U-Profilteil der Oberschiene 4 ist auf die Unterschiene 2 aufgesetzt und greift mit umgebogenen Rändern an den Schenkeln längsverschieblich in entsprechende Rillen oder Nuten in der Unterschiene 2 ein, die daran in Längsrichtung ausgebildet sind. Wie es in Fig. 1 dargestellt ist, fluchten die Außenseiten der beiden Schienen 2 und 4 vorzugsweise miteinander.

Die Schraubenspindel 1 befindet sich im Innenraum, der von den beiden Schienen 2 und 4 umschlossen wird, und steht mit zwei Zahnleisten in Eingriff, die an vorstehenden Stegen oder Rippen ausgebildet sind, die an die Innenseiten der beiden Schenkel des U-Profilteils der Unterschiene 2 angeformt sind. Diese Stege oder Rippen und damit die Zahnleisten befinden sich etwa auf der halben Höhe des Durchmessers der Schraubenspindel 1 vom Boden der Unterschiene 2.

In Fig. 2 ist in einer Draufsicht die Schraubenspindel 1 mit ihrem Gewinde 3 dargestellt. Wenn diese Schraubenspindel 1 über einen nicht dargestellten Antrieb gedreht wird, so bewegt sie sich in Eingriff mit den Zahnleisten auf beiden Innenseiten der Schenkel des U-Profilteils der Unterschiene 2 vor und zurück, je nachdem in welche Richtung der Antriebsmotor gedreht wird.

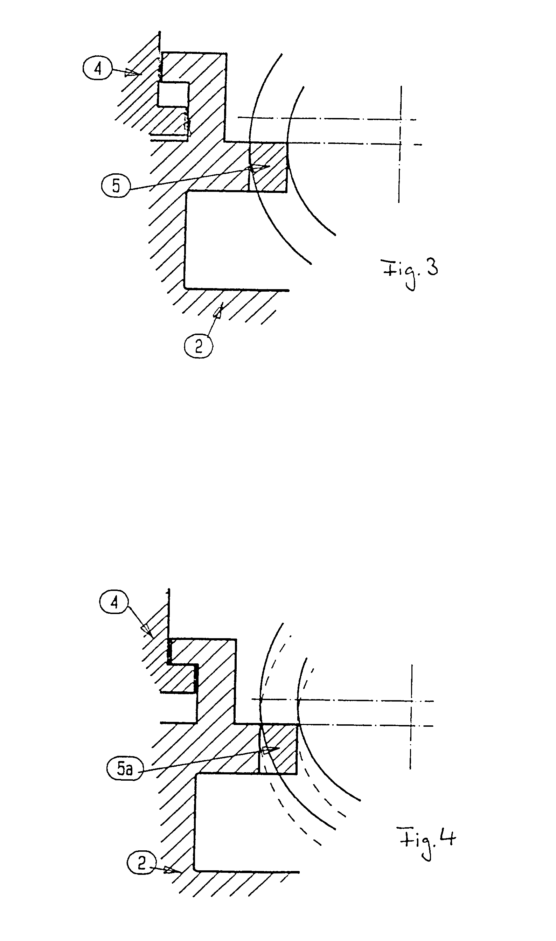

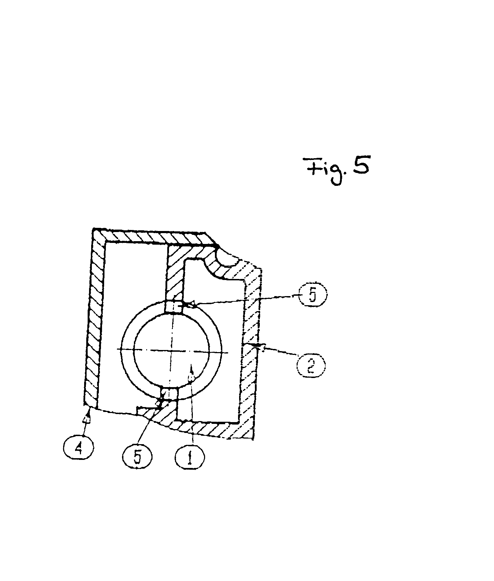

Wie es in Fig. 1 und in den Fig. 3 und 4 im einzelnen dargestellt ist, stehen die in Längsrichtung verlaufenden Zahnleisten vertikal parallel zu den Schenkeln des U-Profilteils der Unterschiene 2 im Gegensatz zu der in Fig. 5 dargestellten Ausbildung der bekannten Vorrichtung, bei der die Zahnleiste horizontal liegt.

Wie es in Fig. 3 im einzelnen dargestellt ist, steht im Normalfall, d.h. dann, wenn kein äußerer Stoß am Fahrzeug liegt, die Schraubenspindel 1 mit ihrem Gewinde 3 mit der vertikal stehenden Zahnleiste an der Innenseite des Schenkels der Unterschiene 2 über die Eingriffsfläche 5 in Eingriff. Wenn gemäß Fig. 4 ein Stoß am Fahrzeug liegt, der bewirkt, daß die Oberschiene 4 zusammen mit der Schraubenspindel 1 aufgrund des Spiels in der Führung zwischen den beiden Schienen 2 und 4 etwas angehoben wird, dann ergibt sich als Eingriffsfläche zwischen dem Gewinde der Schraubenspindel 1 und der Zahnleiste an der Unterschiene 2 die Fläche 5a in Fig. 4, die nur wenig kleiner als die entsprechende Eingriffsfläche 5 im Normalfall in Fig. 3 ist. Es besteht daher keine Gefahr, daß in dem in Fig. 4 dargestellten Zustand das Gewinde der Schraubenspindel 1 über die Zahnleiste an der Unterschiene 2 hinwegrutscht und sich dadurch die Position des Fahrzeugsitzes verändert. Der Fahrzeugsitz bleibt auch bei einem Stoß, d.h. einem Aufprall des Fahrzeuges in seiner gewählten Position.

Aufgrund der geringfügigen Veränderung der Größe der Eingriffsflächen 5 und 5a im Normalzustand und bei einem Aufprall des Fahrzeuges reicht die Festigkeit des üblichen Unterschienenmaterials im Gewindeeingriffsbereich aus, die Schraubenspindel und damit den Fahrzeugsitz in seiner Lage festzuhalten. Es ist nicht erforderlich, Zahnstangen aus einem relativ festeren Material in die Unterschiene 2 einzusetzen oder daran anzubringen. Als Material für die Ober- und Unterschiene 2, 4 können stranggepreßte Aluminiumprofile verwendet werden.

Das in Fig. 5 dargestellte Ausführungsbeispiel der erfindungsgemäßen Vorrichtung zum Führen und Halten eines nicht dargestellten Fahrzeugsitzes in Längsrichtung des Fahrzeuges relativ zu einer gleichfalls nicht dargestellten Fahrzeugkarosserie besteht im wesentlichen aus einer Unterschiene 2, die an der Fahrzeugkarosserie befestigt ist, einer Oberschiene 4, die am Fahrzeugsitz befestigt ist, und einer Schraubenspindel 1, die relativ zur Oberschiene 4 drehbar, jedoch im übrigen relativ dazu unbeweglich an der Oberschiene 4 gehalten ist.

Vorzugsweise sind die Unterschiene 2 sowie die Oberschiene 4 aus Profilteilen, insbesondere U-Profilteilen gebildet, wobei die Unterschiene 2 mit einem Schenkel ihres U-Profils horizontal auf der Fahrzeugkarosserie aufliegt und daran befestigt ist, so daß die Basis des U-Profilteils vertikal verläuft. Das Profilteil der Oberschiene 4 ist auf die Unterschiene 2 aufgesetzt und längsverschieblich bezüglich der Unterschiene 2 gehalten.

Die Schraubenspindel 1 befindet sich im Innenraum, der von den beiden Schienen 2 und 4 umschlossen wird, und steht mit zwei Zahnleisten 5 in Eingriff, die an vorstehenden Stegen oder Rippen ausgebildet sind, die an die Innenseiten der beiden Schenkel des U-Profilteils der Unterschiene 2 angeformt sind. Wie es in Fig. 1 dargestellt ist, liegen diese Stege oder Rippen achssymmetrisch zu der Schraubenspindel und vorzugsweise auf einer vertikalen Linie, die durch die Achse der Schraubenspindel 1 geht, so daß die Zahnleisten 5 vertikal zueinander angeordnet sind.

Die Zahnleisten 5 können jedoch achssymmetrisch auch unter irgendeinem anderen beliebigen Winkel zur Vertikalrichtung vorzugsweise unter einem beliebigen Winkel zur Vertikalrichtung ungleich 90 angeordnet sein.

Wenn sich bei einem Aufprall des Fahrzeuges die Oberschiene 4 zusammen mit der Schraubenspindel 1 und somit der damit verbundene Fahrzeugsitz etwas in vertikaler Richtung gegenüber der Unterschiene 2 abhebt, die fest auf dem Karosserieboden sitzt, dann wird eine möglich Abnahme der Eingriffsfläche zwischen der Schraubenspindel 1 und der in vertikaler Richtung unteren Zahnleiste 5 durch eine entsprechende Zunahme dieser Eingriffsfläche an der oberen Zahnleiste 5 kompensiert, so daß die Gesamteingriffsfläche konstant bleibt. Ein Rutschen der Spindel 1 über die Zahnleisten 5 aufgrund einer verringerten Eingriffsfläche bei einem Aufprall ist damit ausgeschlossen.

Die erfindungsgemäße Vorrichtung hat somit den Vorteil, daß ohne größeren Aufwand bei der Herstellung sichergestellt werden kann, daß auch bei einem am Fahrzeug liegenden Stoß sich die gewählte Position des Fahrzeugsitzes in Längsrichtung des Fahrzeuges nicht ändert, da ein fester Eingriff zwischen der Schraubenspindel und der Verzahnung an der Unterschiene beibehalten wird.

## Patentansprüche

1. Vorrichtung zum Führen und Halten eines Fahrzeugsitzes in Längsrichtung des Fahrzeuges relativ zur Fahrzeugkarosserie mit einer Unterschiene, die in Längsrichtung des Fahrzeuges an der Fahrzeugkarosserie befestigt ist, einer Oberschiene, die in Längsrichtung des Fahrzeuges am Fahrzeugsitz befestigt ist und an der Unterschiene entlang geführt ist, und einer Schraubenspindel, die drehbar an der Oberschiene gehalten ist und mit ihrem Außengewinde in eine Verzahnung eingreift, die an der Unterschiene vorgesehen ist, dadurch gekennzeichnet, daß die Verzahnung aus wenigstens einer im wesentlichen vertikal stehenden Zahnleiste besteht.

2. Vorrichtung nach Anspruch 1, dadurch gekennzeichnet, daß die Unterschiene (2) aus einem U-Profilteil besteht, das mit seiner Basis horizontal an der Fahrzeugkarosserie befestigt ist, und jeweils eine Zahnleiste an den beiden vertikal stehenden Schenkelinnenseiten des U-Profilteils ausgebildet sind.

3. Vorrichtung nach Anspruch 2, dadurch gekennzeichnet, daß die Zahnleisten am vorderen Ende von längsverlaufenden Rippen ausgebildet sind, die an die Innenseiten des U-Profilteils der Unterschiene (2) jeweils angeformt sind.

4. Vorrichtung nach Anspruch 1, dadurch gekennzeichnet, daß die Verzahnung aus zwei Zahnleisten (5) besteht, die an zur Achse der Schraubenspindel (1) symmetrischen Positionen vorgesehen sind.

5. Vorrichtung nach Anspruch 4, dadurch gekennzeichnet, daß die beiden Zahnleisten (5) an Positionen unter einem Winkel ungleich 90_{°} zur Vertikalrichtung angeordnet sind.

6. Vorrichtung nach Anspruch 5, dadurch gekennzeichnet, daß die Zahnleisten (5) vertikal zueinander angeordnet sind.

7. Vorrichtung nach Anspruch 6, dadurch gekennzeichnet, daß die Unterschiene (2) aus einem U-Profilteil besteht, das mit einem Schenkel horizontal an der Fahrzeugkarosserie befestigt ist, und eine der beiden Zahnleisten (5) an der Innenseite dieses Schenkels ausgebildet ist, während die andere Zahnleiste (5) an der Innenseite des gegenüberliegenden Schenkels bezüglich der Achse der Schraubenspindel (1) diametral gegenüber angeordnet ist.
